# EUROPEAN PATENT SPECIFICATION

(11) **EP 3 117 264 B1**
(45) Date of publication and mention of the grant of the patent: **14.06.2023**
(21) Application number: 14885409.4
(22) Date of filing: 12.03.2014
(51) Int. Cl.: G02C 7/04

(54) **CONTACT LENSES WITH HYBRID POWER SOURCES**
KONTAKTLINSEN MIT HYBRIDEN ENERGIEQUELLEN
LENTILLES DE CONTACT AYANT DES SOURCES D'ÉNERGIE HYBRIDE

(43) Date of publication of application: 18.01.2017
(73) Proprietor: Verily Life Sciences LLC, Mountain View, CA 94043 (US)
(72) Inventor: PLETCHER, Nathan, Mountain Vieuw, CA 94043 (US); OTIS, Brian, Mountain View, CA 94043 (US)
(74) Representative: Mewburn Ellis LLP
(86) International application number: PCT/US2014/024124
(87) International publication number: WO 2015/137937

(56) References cited:
- WO-A1-00/25662
- WO-A1-2008/091859
- WO-A1-2011/163080
- WO-A2-2005/033782
- US-A1- 2008 208 335
- US-A1- 2010 110 372
- US-A1- 2012 038 881
- US-A1- 2012 162 600
- US-A1- 2012 245 444
- US-A1- 2012 259 188

## Description

### TECHNICAL FIELD

This disclosure generally relates to contact lenses having hybrid power sources.

### BACKGROUND

US 2012/162600 A1 discloses methods and apparatus for providing an ophthalmic lens with a stacked integrated component device. The stacked integrated component device may contain an energy source capable of powering an electrical component incorporated into the lens.

WO 2008/091859 A1 discloses a lens including a flexible refractive optic having a fixed refractive index, an electro-active element embedded within the flexible refractive optic, wherein the electro-active element has an alterable refractive index, and a controller electrically connected to the electro-active element wherein when power is applied thereto the refractive index of the electro-active element is altered.

WO 2011/163080 A1 discloses an ophthalmic device that includes two application-specific integrated circuits (ASICs) for processing accommodative response and actuating an electro-active element: a high-voltage ASIC that steps up a low voltage from a power supply to a higher voltage suitable for actuating the electro-active element, and another ASIC that operates at low voltage (and therefore consumes little power) and controls the operating state of the high-voltage ASIC.

### BRIEF DESCRIPTION OF THE DRAWINGS

FIG. 1 is an illustration of a block diagram of an exemplary non-limiting system that facilitates contact lenses having hybrid power sources in accordance with aspects described herein.
FIGs. 2A, 2B and 2C are illustrations of block diagrams of exemplary non-limiting contact lenses having hybrid power sources in accordance with aspects described herein.
FIG. 3 is an illustration of a block diagram of an exemplary non-limiting hybrid power component that facilitates contact lenses having hybrid power sources in accordance with aspects described herein.
FIGs. 4, 5 and 6 are illustrations of exemplary flow diagrams of methods that facilitate contact lenses having hybrid power sources in accordance with aspects described herein.
FIG. 7 is an illustration of a schematic diagram of an exemplary networked or distributed computing environment for implementing one or more aspects described herein.
FIG. 8 is an illustration of a schematic diagram of an exemplary computing environment for implementing one or more aspects described herein.

### DETAILED DESCRIPTION

Various aspects are now described with reference to the drawings, wherein like reference numerals are used to refer to like elements throughout. In the following description, for purposes of explanation, numerous specific details are set forth in order to provide a more thorough understanding of one or more aspects. It is evident, however, that such aspects can be practiced without these specific details. In other instances, structures and devices are shown in block diagram form in order to facilitate describing one or more aspects.

Apparatus, systems and/or methods disclosed herein relate to contact lenses having hybrid power sources. A contact lens according to a first aspect of the invention is set out in claim 1.

The contact lens may be as described in the dependent claims.

A method according to a second aspect of the invention is set out in claim 15.

One or more aspects of the apparatus, systems and/or methods described herein can advantageously facilitate two or more different forms of power supply on contact lenses. In various aspects, the different forms of power can be supplied intermittently, periodically, based on conditions and the like.

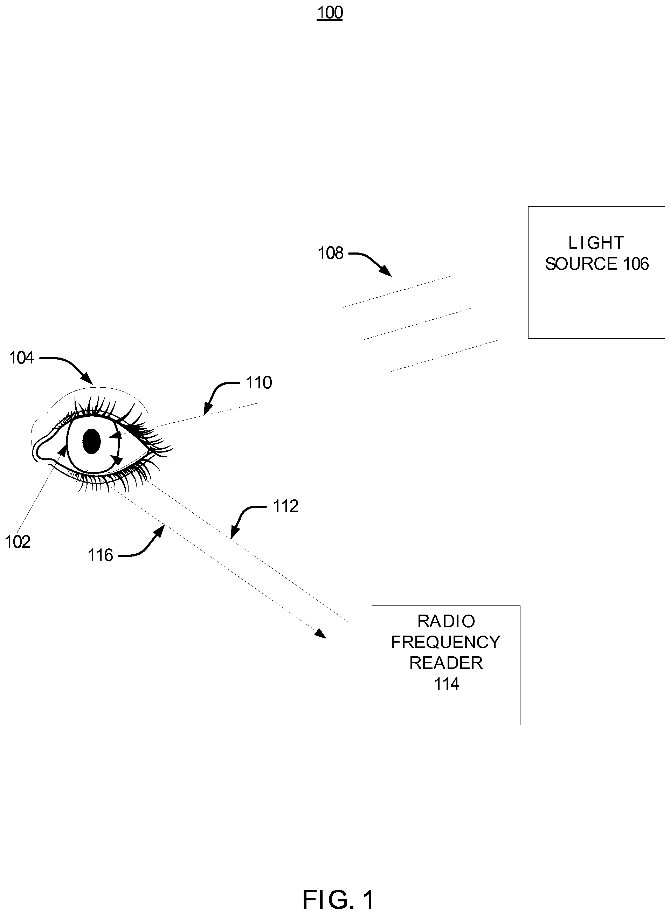

FIG. 1 is an illustration of a block diagram of an exemplary non-limiting system that facilitates contact lenses having hybrid power sources in accordance with aspects described herein.

The system 100 can include a light source 106 that emits light rays 108 (resulting in light 110 incident on the contact lens 102), an RF reader 114 that emits RF energy 112, a contact lens 102 positioned on an eye 104 of a wearer of the contact lens and having a circuit (not shown). The circuit includes one or more sensors (not shown), a hybrid power component (not shown), photovoltaic or solar cells (not shown) and circuitry (not shown), disposed on or within a substrate of the contact lens 102.

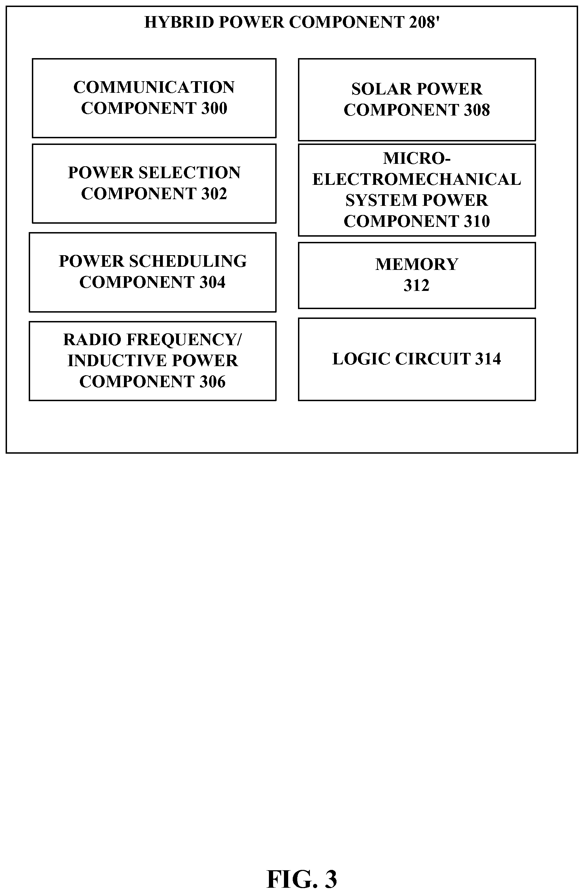

The hybrid power component can supply different types of power in connection with the contact lens 102. For example, as described in greater detail with reference to FIG. 3, the hybrid power component can select a type of power to output from the hybrid power component. The power output is supplied to the circuit, one or more sensors and/or any other portions of the contact lens 102 that employ power. In various aspects, the different types of power that the hybrid power component can output are solar power and can include, but are not limited to, RF/inductive power and/or microelectrical mechanical systems (MEMS)-generated electric power.

In various aspects, the RF/inductive power can be received from an RF reader in the geographic proximity of the contact lens 102. For example, the RF/inductive power can be received via an antenna on the contact lens 102. In some aspects, the solar power can be received from sunlight and/or ambient light incident on photovoltaic cells of the contact lens 102. In some aspects, the MEMS-based power can be generated based, at least, on one or more MEMS devices on the contact lens 102. The MEMS devices can be adapted to generate power based, at least, on for example stress and corresponding deformation applied to the contact lens 102 when the wearer of the contact lens 102 blinks and the eyelid applies pressure to the contact lens 102 while the eyelid is closed.

In various aspects, the contact lens 102 can output information 116 to the RF reader 114 in response to detecting that the RF reader 114 is within a selected geographic proximity to the contact lens 102. For example, in some aspects, the contact lens 102 can include values or information sensed by the one or more sensors.

In some aspects, the system 100 includes the contact lens 102 having the circuit that includes one or more sensors, one or more photovoltaic or solar cells, the microelectromechanical system (MEMS) components, RF components (e.g., antenna), a power storage and/or circuitry disposed on or within a substrate of the contact lens.

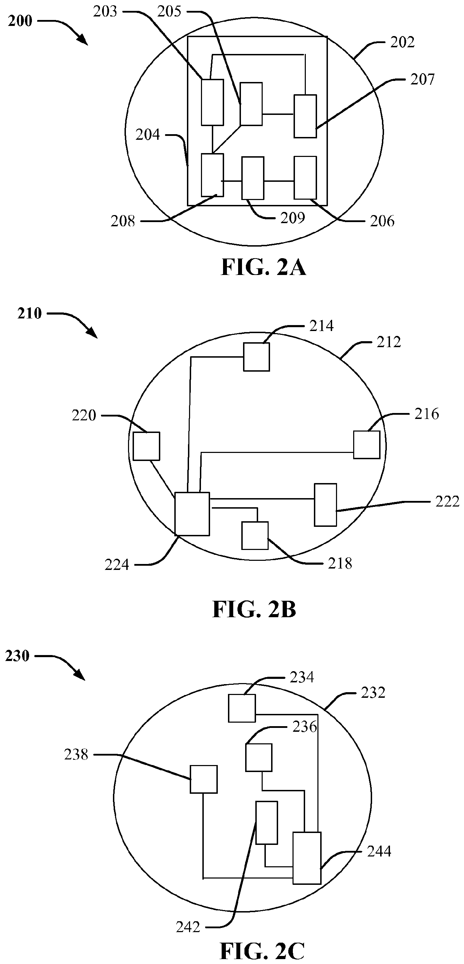

Various aspects of the contact lens will be described with reference to FIGs. 2A, 2B, 2C and 3. FIGs. 2A, 2B and 2C are illustrations of block diagrams of exemplary non-limiting contact lenses having hybrid power sources in accordance with aspects described herein.

Turning first to FIG. 2A, the contact lens 200 includes a substrate 202. In some aspects, the substrate 202 is formed to cover at least a portion of an iris of an eye. While not shown in FIG. 2A, in some aspects, the substrate 202 is formed as a ring. In various aspects, one or more portions of the substrate 202 can be transparent or translucent. In some aspects, the substrate 202 can be flexible or semi-rigid.

The contact lens 200 includes a circuit 204 disposed on or within the substrate 202. For example, in some aspects, the circuit 204 can be encapsulated in the substrate 202. In various aspects, the circuit 204 can include a number of chips, photovoltaic or solar cells and/or sensors communicatively and/or electrically coupled to one another and having one or more different functions. The photovoltaic cells can be single crystal silicon photovoltaic cells in some embodiments. In various embodiments, the photovoltaic cells can be formed from or include biocompatible organic dyes, thin films, organic polymers and/or nanocrystals in various aspects. The nanocrystals can be based on silicon, cadmium telluride or copper indium gallium (di)selenide. The organic polymers can be or include polyphenylene vinylene or copper phthalocyanine.

As shown in FIG. 2A, the circuit includes one or more photovoltaic cells 203, 205, a sensor 206, a power storage component 207, a hybrid power component 208, and circuitry 209. In various aspects, the one or more photovoltaic cells 203, 205, sensor 206, power storage component 207, hybrid power component 208 and/or circuitry 209 can be operably, electrically and/or communicatively coupled to one another to perform one or more functions performed on or via the contact lens 200. One or more of the photovoltaic cells 203, 205, sensor 206, power storage component 207, hybrid power component 208 and/or circuitry 209 can be disposed on or within the substrate 202.

In some aspects, the sensor 206 can sense information associated with the wearer of the contact lens 200 (or information associated with an environment outside of the contact lens). Accordingly, in various aspects, the sensor 206 can sense biological and/or chemical features. By way of example, but not limitation, the sensor 206 can sense biological and/or chemical features such as a level of lactate, glucose, cholesterol and/or urea in the body of the wearer of the contact lens 200. In some embodiments, the sensor 206 can sense other features, including, but not limited to, pressure, light, acceleration, temperature and/or strain.

While the description describes one sensor 206, and the drawing for FIG. 2A illustrates the same, in various aspects, the circuit 204 can include more than one sensor. For example, in aspects including multiple sensors, the sensors can be formed in any number of different types of configurations, including, but not limited to, a circular array of sensors and/or sensors disposed along the perimeter of the substrate 202. For example, FIG. 2B illustrates a contact lens 210 having components disposed along a perimeter of the substrate 212. For example, sensors 214, 216, 218, hybrid power component 224, photovoltaic cell 220 and the circuitry 222 are disposed along a perimeter of the substrate 212. Other examples of configurations include semi-circular arrangements, square or rectangular arrangements of components positioned around the periphery of the iris, for example, or the like.

In various aspects, the sensors can be positioned over the surface of the substrate 202 in any number of different configurations. For example, FIG. 2C illustrates a contact lens 230 having sensors 234, 238 disposed across the surface of the substrate 232. As shown, the contact lens 230 can also include a hybrid power component 244, photovoltaic cell 236 and/or circuitry 242 disposed across the surface of the substrate 232. In various aspects, the sensors 234, 238 can be disposed across 25%, 50% or 75% of the surface of the substrate 232. In these aspects, one or more of the sensors 234, 238 can be transparent or translucent in order to enable a wearer of the contact lens 230 to view a sufficient portion of the environment outside of the contact lens 230.

Accordingly, as illustrated in FIGs. 2A, 2B, 2C, different numbers, configurations and/or transparency levels of the sensors and/or other components of the contact lens are envisaged herein and can be implemented according to space and/or design considerations.

Turning back to FIG. 2A, in some aspects, the one or more photovoltaic cells 203, 205 can receive light incident on the photovoltaic cells 203, 205. In various aspects, the light can be sunlight and/or ambient light.

In some aspects, the photovoltaic cells 203, 205 can generate solar power based on the received light. In various aspects, the one or more photovoltaic cells 203, 205 can output solar energy to the hybrid power component 208.

In some aspects, the one or more photovoltaic cells 203, 205 can output solar power to trickle charge a storage capacitor (not shown) of the power storage component 207, to enable a memory (not shown) in the circuit 204 to retain state information and/or to enable the sensor 206 to sense information associated with the wearer of the contact lens 200 (or about an environment outside of the contact lens). For example, in some aspects, the photovoltaic cells 203, 205 can convert the light received into electricity. The electricity can be output at a rate that is approximately equal to the rate of discharge of the electrical charge of the storage capacitor. As such, the rate of electricity output from the photovoltaic cells 203, 205 can be such that the storage capacitor receives a trickle charge. In other embodiments, the power storage component 207 can be or include a thin film battery.

In various aspects, the one or more photovoltaic cells 203, 205 can be disposed across 25%, 50% or 75% of the surface of the substrate 202. In these aspects, one or more of the photovoltaic cells 203, 205 can be transparent or translucent in order to enable a wearer of the contact lens 200 to view a sufficient portion of the environment outside of the contact lens 200.

While the term "photovoltaic cell" has been used herein, in various aspects, solar cells can be employed in lieu of or in addition to the one or more photovoltaic cells 203, 205.

The power storage component 207 can store power from the photovoltaic cells 203, 205. In various aspects, the power storage component 207 can include a storage capacitor (not shown) that can store a charge based on the power stored at the power storage component 207. The stored power can be employed for one or more different functions of the contact lens 200. For example, the stored power can be employed to retain state information in the memory of the circuitry 209. The stored power can be employed to retain state information by maintaining the memory of the circuitry 209 in an on state and/or in a state such that the state information stored in the memory is not erased.

The circuitry 209 can perform one or more functions including, but not limited to, processing information sensed by the sensor 206, communicating with an external reader or other device (e.g., RF reader 114 of FIG. 1), processing information or the like. In some aspects, the circuitry 209 can determine the information (e.g., level of glucose, cholesterol urea or lactate or pressure, light, acceleration, temperature and/or strain) sensed at the sensor 206 and/or output such information.

The hybrid power component 208 will be described in detail with reference to FIGs. 2A and 3. FIG. 3 is an illustration of a block diagram of an exemplary non-limiting hybrid power component that facilitates contact lenses having hybrid power sources in accordance with aspects described herein. In various aspects, one or more of the structure and/or functionality described with reference to the hybrid power component 208 can be included in the hybrid power component 208' (and vice versa).

The hybrid power component 208' can be referred to as a hybrid power component because the component can select and/or output different types of power to the circuit of the contact lens in various aspects. It is to be appreciated that respective power sources described herein can be employed to provide power to a storage device (e.g., capacitor) and/or directly provide power to devices or circuitry. Moreover, one or more of the power sources can be employed individually or in cooperation with other power sources (e.g., to provide load balancing, redundancy, fail-over, etc.). The hybrid power component can select optimal power source(s) to employ given state of user, device, environment, etc.

With reference to FIG. 3, the hybrid power component 208' can include a communication component 300, power selection component 302, power scheduling component 304, RF/inductive power component 306, solar power component 308, MEMS power component 310, memory 312 and/or logic circuit 314. In some aspects, one or more of the communication component 300, power selection component 302, power scheduling component 304, RF/inductive power component 306, solar power component 308, MEMS power component 310, memory 312 and/or logic circuit 314 can be electrically and/or communicatively coupled to one another to perform one or more functions of the hybrid power component 208'.

The communication component 300 can transmit and/or receive information. For example, the communication component 300 can transmit information indicative of the features sensed by the sensor 206. As another example, the communication component 300 can receive information or energy from an RF reader, light source or the like.

The power selection component 302 can select a type of power to output from the hybrid power component 208'. For example, the hybrid power component 208' can supply different types of power to the circuitry 209, sensor 206 and/or any other portions of the contact lens 200. In various aspects, the different types of power can include, but are not limited to, RF/inductive power, solar power and/or MEMS-generated electric power.

The RF/inductive power component 306 can receive RF energy from an RF reader in the geographic proximity of the contact lens 200. In some aspects, the RF reader can be the RF reader 114 of FIG. 1. In some aspects, the RF/inductive power component 306 can include an antenna that can receive the RF energy. The RF/inductive power component 306 can employ the received RF energy to generate RF/inductive power in some aspects. The RF/inductive power can be output from the hybrid power component 208 to the sensor 206, circuitry 209 or any of the components of the contact lens 200.

The solar power component 308 can receive solar energy from sunlight and/or ambient light incident on the one or more photovoltaic cells 203, 205 of the contact lens 200. The solar power component 308 can employ the received solar energy to generate solar power in some aspects. The solar power can be output from the hybrid power component 208' to the sensor 206, circuitry 209 or any of the components of the contact lens 200.

The MEMS power component 310 can generate electric power. In some aspects, the MEMS power component 310 can include one or more MEMS devices adapted to generate power based, at least, on the stress and corresponding deformation applied to the contact lens when the wearer of the contact lens 200 blinks. As such, electric power can be output from the hybrid power component 208' to the sensor 206, circuitry 209 or any of the components of the contact lens 200.

The power scheduling component 304 can cause the hybrid power component 208' to output different types of power continually, intermittently, periodically, based upon a condition being satisfied, based on an environment outside of the contact lens 200 and/or based on the operations performed on or via the contact lens 200, as described below in greater detail in the subsequent paragraphs.

For example, in various aspects, the power scheduling component 304 can cause one or more different types of power to be supplied from the hybrid power component 208' concurrently and/or in series. For example, in aspects wherein the different types of power are supplied in series, at a first time, a first type of power can be supplied and at a second time, a second type of power can be supplied. By way of example, but not limitation, RF/inductive power can be output at a first time, solar power can be output at a second time and RF/inductive power can be output again at a third time. The type of power output can be alternated between any number of different types of power. Accordingly, one or more different types of power can be intermittently output in sequence from the hybrid power component 208'.

In some aspects, the power scheduling component 304 can cause the hybrid power component 208' to output the one or more different types of power based on one or more different environmental conditions (e.g., time of day, hour, weather condition indicating whether light is available to power the one or more photovoltaic cells 203, 205 (e.g., level of fog or overcast conditions in the environment)). In various aspects, the time at which particular power is output can be static and/or dynamically-determined.

In some aspects, the power scheduling component 304 can cause the hybrid power component 208' to output the one or more different types of power based on whether a particular source of power is available to the hybrid power component 208'. For example, if a light source is available, the hybrid power component 208' can generate and output solar power. As another example, if an RF reader is available, the hybrid power component can receive RF energy from the RF reader and generate and output RF/inductive power. As another example, if neither solar nor RF energy is available (e.g., the environment is void of light and the contact lens 200 is not near an RF reader), the hybrid power supply can output MEMS-generated electric power.

In some aspects, the power scheduling component 304 can cause the hybrid power component 208' to output the one or more different types of power based on the type of operations performed on or via the contact lens 200 (or sensor 206 or circuitry 209 of the contact lens 200). A first type of operation requires a first level of power and a second type of operation requires a second level of power. The operations can include, but are not limited to, sensing, processing, communication or any of a number of different types of operations performed on or via the circuit 204. The hybrid power component 208' outputs a type of power that meets or exceeds the level of power required for the operation to be performed.

In some aspects, the power scheduling component 304 can cause the hybrid power component 208' to output power periodically. For example, the hybrid power component 208' can awake and output power at periodic intervals to enable the contact lens 200 to perform sensing, communication and/or any number of other different types of functions. In some aspects, the hybrid power component 208' can awake at periodic intervals and the circuit 204 can output information indicative of sensed information. The information can be output to the RF reader or the like.

The hybrid power component 208' can include a memory 312 and a logic circuit 314. For example, the memory 312 can be a computer-readable storage medium storing computer-executable instructions and/or information for performing the functions described in this disclosure with reference to the contact lens 200 (or components thereof). The logic circuit 314 can perform one or more of the functions described in this disclosure with reference to the contact lens 200 (or components thereof).

Turning back to FIG. 2A, although not shown, in various aspects, the contact lens 200 can include a memory and/or logic circuit separate from the memory 312 and the logic circuit 314. In various aspects, a single memory and a single logic circuit can be employed on the contact lens 200.

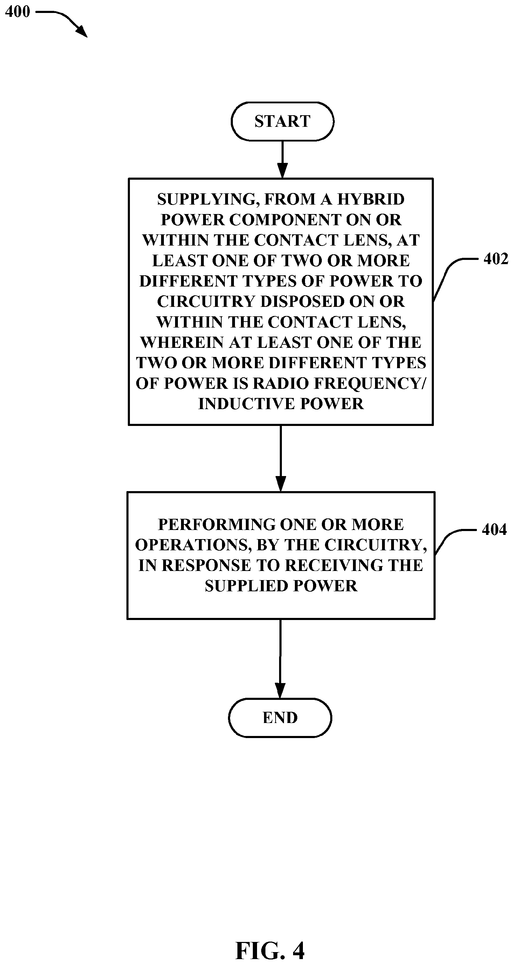

FIGs. 4, 5 and 6 are illustrations of exemplary flow diagrams of methods that facilitate contact lenses having hybrid power sources in accordance with aspects described herein. Turning first to FIG. 4, at 402, method 400 includes supplying, from a hybrid power component on or within the contact lens, at least one of two or more different types of power to circuitry disposed on or within the contact lens, wherein at least one of the two or more different types of power is RF/inductive power (e.g., using the hybrid power component 208'). In some aspects, two or more different types of power can be supplied to the circuitry. For example, solar, RF and/or MEMS-based power can be supplied to the circuitry.

In some aspects, the power can be supplied intermittently. For example, at a first time, a first type of power can be supplied and at a second time, a second type of power can be supplied.

The time at which a particular type of power is output can be static and/or dynamically-determined based on any number of factors including, but not limited to, the environment of the contact lens wearer. For example, in various aspects, the type of power supplied can be based on whether a particular source of power is available to the hybrid power component. For example, if a light source is available, the hybrid power component can output solar power. As another example, if an RF reader is available, the hybrid power component can receive RF energy from the RF reader and output RF/inductive power. As another example, if neither solar nor RF energy is available (e.g., the environment is void of light and is not near an RF reader), the hybrid power supply can output MEMS-generated electric power.

In some aspects, the type of power supplied is based on the operations performed by the circuitry. For example, a first type of operation can require a first level of power and a second type of operation can require a second level of power. The hybrid power component outputs a type of power that meets or exceeds the power required for the operation.

At 404, method 400 can include performing one or more operations, by the circuitry, in response to receiving the supplied power (e.g., using the circuit 204). By way of example, but not limitation, the operations can include sensing, processing, communication or any of a number of different types of operations performed on or via the circuit 204.

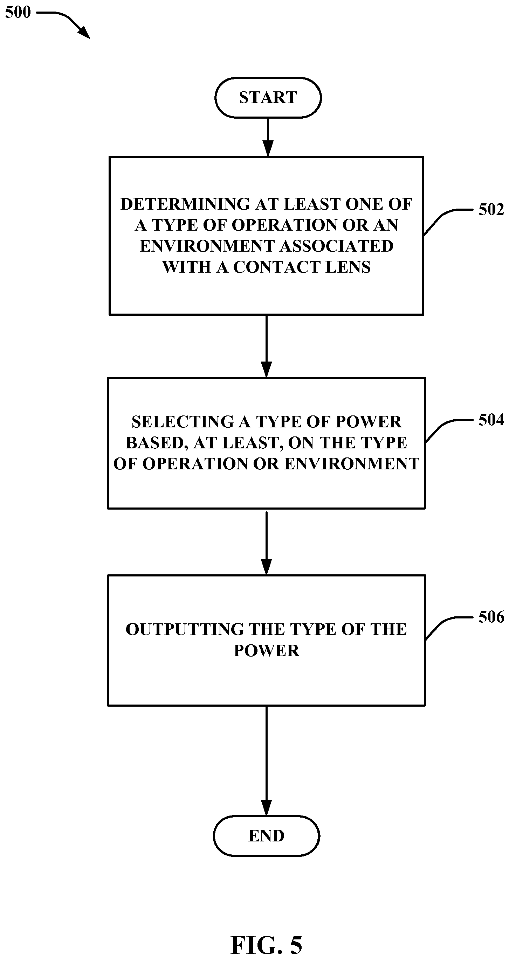

Turning now to FIG. 5, at 502, method 500 includes determining at least one of a type of operation or an environment associated with the contact lens (e.g., using the hybrid power component 208'). In some aspects, the environment can be a time of day (e.g., nighttime, twilight, daytime or hour), an indicator of whether light is available to power photovoltaic cells (e.g., level of fog or overcast conditions in the environment), whether an RF reader is within a particular geographic proximity to the circuit 204 or the like. In aspects, the operation type can include, but is not limited to, sensing, communication or the like.

At 504, method 500 includes selecting a type of power based, at least, on the type of the operation or environment (e.g., using the hybrid power component 208'). For example, the type of power can be RF, solar and/or MEMS-generated power and can be determined based on whether sensing is being performed, for example. As another example, the type of power can be based on whether nighttime conditions exist, for example, and solar power is not available.

At 506, method 500 includes outputting the type of the power (e.g., using the hybrid power component 208'). In various aspects, the power can be output continually and/or intermittently.

As one example, in some aspects, two or more different types of power can be intermittently output in sequence from the hybrid power component. By way of example, but not limitation, RF/inductive power can be output at a first time, solar power can be output at a second time and RF/inductive power can be output again at a third time. The type of power output can be alternated between any number of different types of power.

In another example, power can be output periodically. In another example, power of a first type can be output during a time period corresponding to a first type of operation or environmental condition while power of a second type can be output during a time period corresponding to a second type of operation or environmental condition.

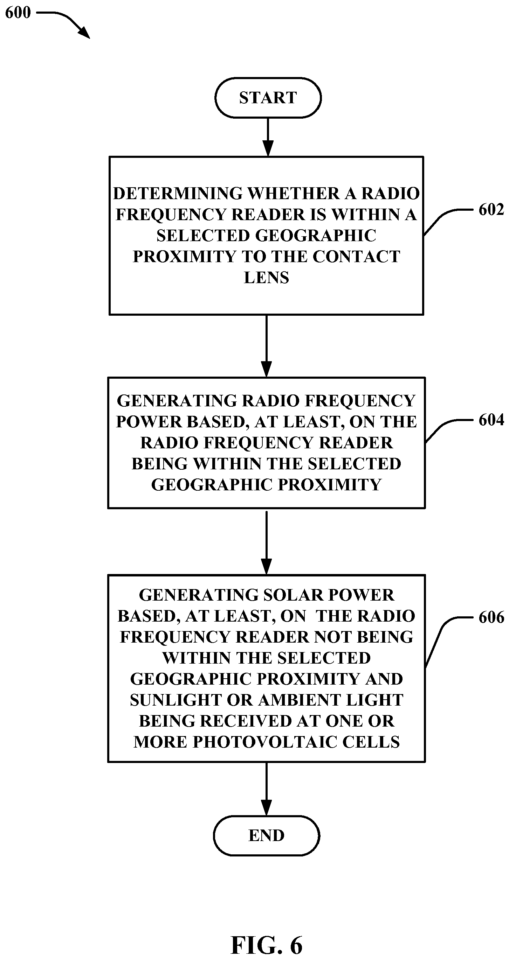

Turning now to FIG. 6, at 602, method 600 can include determining whether a RF reader is within a selected geographic proximity to the contact lens (e.g., using the communication component 300).

At 604, method 600 can include generating RF/inductive power based, at least, on the RF reader being within the selected geographic proximity (e.g., using the hybrid power component 208'). For example, the RF/inductive power can be generated upon receiving a signal from the RF reader.

At 606, method 600 can include generating solar power based, at least, on the RF reader not being within the selected geographic proximity and sunlight or ambient light being received at one or more photovoltaic cells (e.g., using the hybrid power component 208').

### EXEMPLARY NETWORKED AND DISTRIBUTED ENVIRONMENTS

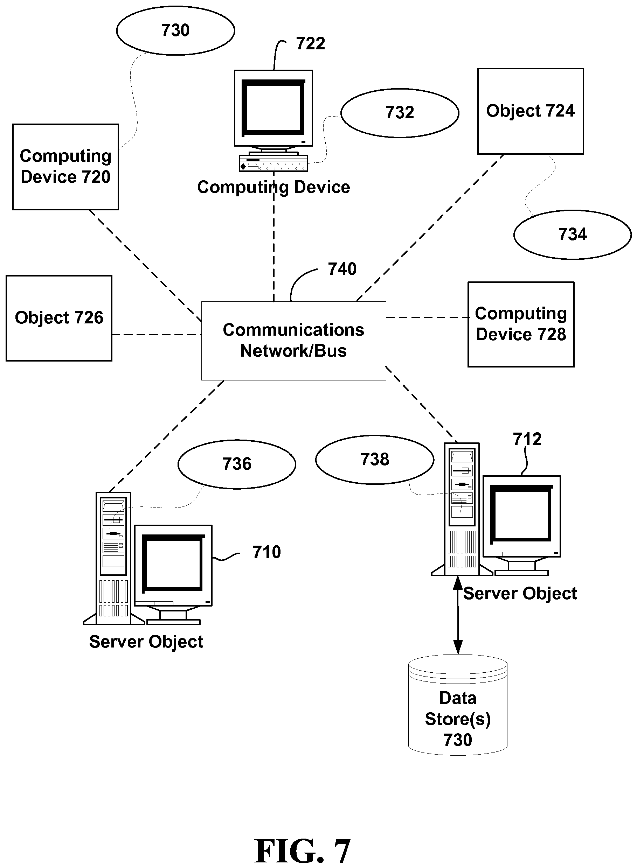

FIG. 7 provides a schematic diagram of an exemplary networked or distributed computing environment with which one or more aspects described in this disclosure can be associated. The distributed computing environment includes computing objects 710, 712, etc. and computing objects or devices 720, 722, 724, 726, 728, etc., which can include programs, methods, data stores, programmable logic, etc., as represented by applications 730, 732, 734, 736, 738. It can be appreciated that computing objects 710, 712, etc. and computing objects or devices 720, 722, 724, 726, 728, etc. can include different devices, such as active contact lenses (and components thereof), personal digital assistants (PDAs), audio/video devices, mobile phones, MPEG-1 Audio Layer 3 (MP3) players, personal computers, laptops, tablets, etc.

Each computing object 710, 712, etc. and computing objects or devices 720, 722, 724, 726, 728, etc. can communicate with one or more other computing objects 710, 712, etc. and computing objects or devices 720, 722, 724, 726, 728, etc. by way of the communications network 740, either directly or indirectly. Even though illustrated as a single element in FIG. 7, network 740 can include other computing objects and computing devices that provide services to the system of FIG. 7, and/or can represent multiple interconnected networks, which are not shown.

In a network environment in which the communications network/bus 740 can be the Internet, the computing objects 710, 712, etc. can be Web servers, file servers, media servers, etc. with which the client computing objects or devices 720, 722, 724, 726, 728, etc. communicate via any of a number of known protocols, such as the hypertext transfer protocol (HTTP).

### EXEMPLARY COMPUTING DEVICE

As mentioned, advantageously, the techniques described in this disclosure can be associated with any suitable device. It is to be understood, therefore, that handheld, portable and other computing devices (including active contact lens having circuitry or components that compute and/or perform various functions). As described, in some aspects, the device can be the contact lens (or components of the contact lens) and/or reader described herein. In various aspects, the data store can include or be included within, any of the memory described herein, any of the contact lenses described herein and/or the RF reader described herein. In various aspects, the data store can be any repository for storing information transmitted to or received from the contact lens.

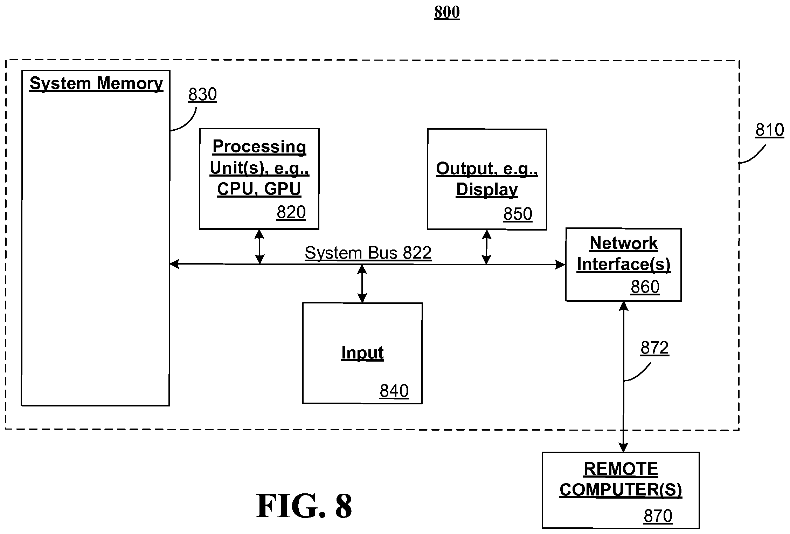

FIG. 8 illustrates an example of a suitable computing system environment 800 in which one or aspects of the aspects described in this disclosure can be implemented. Components of computer 810 can include, but are not limited to, a processing unit 820, a system memory 830, and a system bus 822 that couples various system components including the system memory to the processing unit 820.

Computer 810 typically includes a variety of computer readable media and can be any available media that can be accessed by computer 810. The system memory 830 can include computer storage media in the form of volatile and/or nonvolatile memory such as read only memory (ROM) and/or random access memory (RAM). By way of example, and not limitation, memory 830 can also include an operating system, application programs, other program components, and program data.

A user can enter commands and information into the computer 810 through input devices 840 (e.g., keyboard, keypad, a pointing device, a mouse, stylus, touchpad, touch screen, motion detector, camera, microphone or any other device that allows the user to interact with the computer 810). A monitor or other type of display device can be also connected to the system bus 822 via an interface, such as output interface 850. In addition to a monitor, computers can also include other peripheral output devices such as speakers and a printer, which can be connected through output interface 850.

The computer 810 can operate in a networked or distributed environment using logical connections to one or more other remote computers, such as remote computer 880. The remote computer 880 can be a personal computer, a server, a router, a network PC, a peer device or other common network node, or any other remote media consumption or transmission device, and can include any or all of the elements described above relative to the computer 810. The logical connections depicted in FIG. 8 include a network 882, such local area network (LAN) or a wide area network (WAN), but can also include other networks/buses e.g., cellular networks.

Computing devices typically include a variety of media, which can include computer-readable storage media and/or communications media, in which these two terms are used herein differently from one another as follows. Computer-readable storage media can be any available storage media that can be accessed by the computer, can be typically of a non-transitory nature, and can include both volatile and nonvolatile media, removable and non-removable media. By way of example, and not limitation, computer-readable storage media can be implemented in connection with any method or technology for storage of information such as computer-readable instructions, program components, structured data, or unstructured data. Computer-readable storage media can include, but are not limited to, RAM, ROM, electrically erasable programmable read only memory (EEPROM), flash memory or other memory technology, or other tangible and/or non-transitory media which can be used to store desired information. Computer-readable storage media can be accessed by one or more local or remote computing devices, e.g., via access requests, queries or other data retrieval protocols, for a variety of operations with respect to the information stored by the medium. In various aspects, the computer-readable storage media can be, or be included within, the memory, contact lens (or components thereof) or reader described herein.

On the other hand, communications media typically embody computer-readable instructions, data structures, program components or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals.

It is to be understood that the aspects described in this disclosure can be implemented in hardware, software, firmware, middleware, microcode, or any combination thereof. For a hardware aspect, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors and/or other electronic units designed to perform the functions described in this disclosure, or a combination thereof.

For a software aspect, the techniques described in this disclosure can be implemented with components or components (e.g., procedures, functions, and so on) that perform the functions described in this disclosure. The software codes can be stored in memory units and executed by processors.

What has been described above includes examples of one or more aspects. It is, of course, not possible to describe every conceivable combination of components or methodologies for purposes of describing the aforementioned aspects, but one of ordinary skill in the art can recognize that many further combinations and permutations of various aspects are possible. Accordingly, the described aspects are intended to embrace all such alterations, modifications and variations that fall within the spirit and scope of the appended claims.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

The aforementioned systems have been described with respect to interaction between several components. It can be appreciated that such systems and components can include those components or specified sub-components. Sub-components can also be implemented as components communicatively coupled to other components rather than included within parent components (hierarchical). Additionally, it is to be noted that one or more components can be combined into a single component providing aggregate functionality. Any components described in this disclosure can also interact with one or more other components not specifically described in this disclosure but generally known by those of skill in the art.

In view of the exemplary systems described above methodologies that can be implemented in accordance with the described subject matter will be better appreciated with reference to the flowcharts of the various figures. While for purposes of simplicity of explanation, the methodologies are shown and described as a series of blocks, it is to be understood and appreciated that the claimed subject matter is not limited by the order of the blocks, as some blocks can occur in different orders and/or concurrently with other blocks from what is depicted and described in this disclosure. Where non-sequential, or branched, flow is illustrated via flowchart, it can be appreciated that various other branches, flow paths, and orders of the blocks, can be implemented which achieve the same or a similar result. Moreover, not all illustrated blocks may be required to implement the methodologies described in this disclosure after.

In addition to the various aspects described in this disclosure, it is to be understood that other similar aspects can be used or modifications and additions can be made to the described aspect(s) for performing the same or equivalent function of the corresponding aspect(s) without deviating there from. Still further, multiple processing chips or multiple devices can share the performance of one or more functions described in this disclosure, and similarly, storage can be provided across a plurality of devices. The invention is to be limited in accordance with the appended claims.

## Claims

1. A contact lens (102, 200, 210, 230), comprising:
a substrate (202, 212, 232); and
a circuit (204) comprising:
one or more sensors (206, 214, 216, 218, 234, 238) disposed on or within the substrate (202, 212, 232);
circuitry (209, 222, 242) disposed on or within at least a portion of the substrate (202, 212, 232); and
one or more photovoltaic cells (203, 204, 220, 236) disposed on or within at least a portion of the substrate (202, 212, 232);
**characterised in that** the contact lens (102, 200, 210, 230) further comprises:
a hybrid power component (208, 224, 244) disposed on or within the substrate (102, 200, 210, 230), wherein the hybrid power component (208, 224, 244) is configured to:
select at least one of two or more different types of power based on at least an operation of the circuitry (209, 222, 242), wherein a first type of operation of the circuitry (209, 222, 242) requires a first level of power and a second type of operation of the circuitry (209, 222, 242) requires a second level of power, and
supply the selected at least one of two or more different types of power to the circuitry (209, 222, 242) and to the one or more sensors (206, 214, 216, 218, 234, 238), wherein the at least one of two or more different types of power meets or exceeds a level of power required by the operation of the circuitry (209, 222, 242);
wherein one of the two or more different types of power is photovoltaic power provided by the one or more photovoltaic cells (203, 204, 220, 236).

2. The contact lens (102, 200, 210, 230) of claim 1, wherein the one or more sensors (206, 214, 216, 218, 234, 238) sense at least one of pressure, light, acceleration, temperature or strain.

3. The contact lens (102, 200, 210, 230) of claim 1, wherein another one of the two or more different types of power is radio frequency/inductive power.

4. The contact lens (102, 200, 210, 230) of claim 3, wherein the hybrid power component (208, 224, 244) is configured to supply the radio frequency/inductive power and the photovoltaic power intermittently.

5. The contact lens (102, 200, 210, 230) of claim 1, further comprising one or more microelectromechanical systems (310) and wherein another one of the two or more different types of power is electric power provided by the one or more microelectromechanical systems (310).

6. The contact lens (102, 200, 210, 230) of claim 5, wherein the hybrid power component (208, 224, 244) is configured to supply the photovoltaic power and the electric power from the one or more microelectromechanical systems (310) intermittently.

7. The contact lens (102, 200, 210, 230) of claim 1, further comprising a power storage component (207) configured to store power from the one or more photovoltaic cells (203, 204, 220, 236).

8. The contact lens (102, 200, 210, 230) of claim 7, wherein the power storage component (207) comprises a storage capacitor and/or a thin film battery.

9. The contact lens (102, 200, 210, 230) of claim 1, wherein the one or more photovoltaic cells (203, 204, 220, 236) are translucent or transparent.

10. The contact lens (102, 200, 210, 230) of claim 9, wherein the one or more photovoltaic cells (203, 204, 220, 236) are disposed over at least half of a surface of the substrate (202, 212, 232).

11. The contact lens (102, 200, 210, 230) of claim 1, wherein at least one of the one or more photovoltaic cells (203, 204, 220, 236) or the circuitry is disposed along a perimeter of the substrate (202, 212, 232).

12. The contact lens (102, 200, 210, 230) of claim 1, wherein the one or more photovoltaic cells (203, 204, 220, 236) comprise a circular array of two or more photovoltaic cells.

13. The contact lens (102, 200, 210, 230) of claim 1, wherein the hybrid power component (208, 224, 244) is configured to supply at least two of the two or more different types of power to the circuitry (209, 222, 242) and to the one or more sensors (206, 214, 216, 218, 234, 238) and alternate between supplying a first one of the at least two of the two or more different types of power and supplying a second one of the at least two of the two or more different types of power.

14. The contact lens (102, 200, 210, 230) of claim 1, wherein the one or more sensors (206, 214, 216, 218, 234, 238) sense a level of at least one of lactate, glucose, cholesterol or urea in a body of a wearer of the contact lens (102, 200, 210, 230).

15. A method of operating a contact lens (102, 200, 210, 230) according to any one of the preceding claims, the method comprising:
determining at least one of a type of operation performed via the contact lens (102, 200, 210, 230), wherein a first operation of the circuitry requires a first level of power and a second operation of the circuitry requires a second level of power;
selecting at least one of two or more different types of power based, at least, on the type of operation or the environment outside of the contact lens(102, 200, 210, 230); and
outputting the type of power to the circuitry (209, 222, 242) and the one or more sensors (206, 214, 216, 218, 234, 238) of the contact lens (102, 200, 210, 230), wherein the at least one of two or more different types of power meets or exceeds a level of power required by the operation of the circuitry (209, 222, 242).

## Patentansprüche

1. Kontaktlinse (102, 200, 210, 230), die Folgendes umfasst:
ein Substrat (202, 212, 232); und
einen Schaltkreis (204), der Folgendes umfasst:
einen oder mehrere Sensoren (206, 214, 216, 218, 234, 238), die auf oder in dem Substrat (202, 212, 232) angeordnet sind;
eine Schaltungsanordnung (209, 222, 242), die auf oder in zumindest einem Abschnitt des Substrats (202, 212, 232) angeordnet ist; und
eine oder mehrere Photovoltaikzellen (203, 204, 220, 236), die auf oder in zumindest einem Abschnitt des Substrats (202, 212, 232) angeordnet sind;
**dadurch gekennzeichnet, dass** die Kontaktlinse (102, 200, 210, 230) außerdem Folgendes umfasst:
eine Hybridleistungskomponente (208, 224, 244), die auf oder in dem Substrat (102, 200, 210, 230) angeordnet ist, wobei die Hybridleistungskomponente (208, 224, 244) ausgelegt ist, um:
zumindest einen aus zwei oder mehr unterschiedlichen Leistungstypen auf Basis von zumindest einem Betrieb der Schaltungsanordnung (209, 222, 242) auszuwählen, wobei ein erster Betriebstyp der Schaltungsanordnung (209, 222, 242) ein erstes Leistungsausmaß erfordert und ein zweiter Betriebstyp der Schaltungsanordnung (209, 222, 242) ein zweites Leistungsausmaß erfordert, und
den zumindest einen aus zwei oder mehr unterschiedlichen Leistungstypen ausgewählten der Schaltungsanordnung (209, 222, 242) und dem einen oder den mehreren Sensoren (206, 214, 216, 218, 234, 238) zuzuführen, wobei der zumindest eine aus zwei oder mehr unterschiedlichen Leistungstypen ein Leistungsausmaß erfüllt oder übersteigt, das von dem Betrieb der Schaltungsanordnung (209, 222, 242) erfordert wird;
wobei einer aus den zwei oder mehr unterschiedlichen Leistungstypen Photovoltaikleistung ist, die von der einen oder den mehreren Photovoltaikzellen (203, 204, 220, 236) bereitgestellt wird.

2. Kontaktlinse (102, 200, 210, 230) nach Anspruch 1, wobei der eine oder die mehreren Sensoren (206, 214, 216, 218, 234, 238) zumindest eines aus Druck, Licht, Beschleunigung, Temperatur oder Belastung abfühlen.

3. Kontaktlinse (102, 200, 210, 230) nach Anspruch 1, wobei ein anderer aus den zwei oder mehr unterschiedlichen Leistungstypen Hochfrequenz-/induktive Leistung ist.

4. Kontaktlinse (102, 200, 210, 230) nach Anspruch 3, wobei die Hybridleistungskomponente (208, 224, 244) ausgelegt ist, um die Hochfrequenz-/induktive Leistung und die Photovoltaikleistung intermittierend zuzuführen.

5. Kontaktlinse (102, 200, 210, 230) nach Anspruch 1, die außerdem ein oder mehrere mikroelektromechanische Systeme (310) umfasst und wobei ein anderer aus den zwei oder mehr unterschiedlichen Leistungstypen elektrische Leistung ist, die von dem einen oder den mehreren mikroelektromechanischen Systemen (310) bereitgestellt wird.

6. Kontaktlinse (102, 200, 210, 230) nach Anspruch 5, wobei die Hybridleistungskomponente (208, 224, 244) ausgelegt ist, um die Photovoltaikleistung und die elektrische Leistung von dem einen oder den mehreren mikroelektromechanischen Systemen (310) periodisch zuzuführen.

7. Kontaktlinse (102, 200, 210, 230) nach Anspruch 1, die außerdem eine Leistungsspeicherkomponente (207) umfasst, die ausgelegt ist, um Leistung von der einen oder den mehreren Photovoltaikzellen (203, 204, 220, 236) zu speichern.

8. Kontaktlinse (102, 200, 210, 230) nach Anspruch 7, wobei die Leistungsspeicherkomponente (207) einen Speicherkondensator und/oder eine Dünnfilmbatterie umfasst.

9. Kontaktlinse (102, 200, 210, 230) nach Anspruch 1, wobei die eine oder mehreren Photovoltaikzellen (203, 204, 220, 236) transluzent oder transparent sind.

10. Kontaktlinse (102, 200, 210, 230) nach Anspruch 9, wobei die eine oder mehreren Photovoltaikzellen (203, 204, 220, 236) über zumindest die Hälfte einer Oberfläche des Substrats (202, 212, 232) angeordnet sind.

11. Kontaktlinse (102, 200, 210, 230) nach Anspruch 1, wobei zumindest eine aus der einen oder den mehreren Photovoltaikzellen (203, 204, 220, 236) oder die Schaltungsanordnung entlang eines Umfangs des Substrats (202, 212, 232) angeordnet ist.

12. Kontaktlinse (102, 200, 210, 230) nach Anspruch 1, wobei die eine oder mehreren Photovoltaikzellen (203, 204, 220, 236) eine kreisförmige Anordnung aus zwei oder mehr Photovoltaikzellen umfassen.

13. Kontaktlinse (102, 200, 210, 230) nach Anspruch 1, wobei die Hybridleistungskomponente (208, 224, 244) ausgelegt ist, um zumindest zwei der zwei oder mehr unterschiedlichen Leistungstypen der Schaltungsanordnung (209, 222, 242) und dem einen oder den mehreren Sensoren (206, 214, 216, 218, 234, 238) zuzuführen und zwischen der Zufuhr eines ersten aus den zumindest zwei der zwei oder mehr unterschiedlichen Leistungstypen und der Zufuhr eines zweiten aus den zumindest zwei der zwei oder mehr unterschiedlichen Leistungstypen zu wechseln.

14. Kontaktlinse (102, 200, 210, 230) nach Anspruch 1, wobei der eine oder die mehreren Sensoren (206, 214, 216, 218, 234, 238) ein Ausmaß von zumindest einem aus Lactat, Glucose, Cholesterin oder Harnstoff in einem Körper eines Trägers der Kontaktlinse (102, 200, 210, 230) abfühlt oder abfühlen.

15. Verfahren zum Betreiben einer Kontaktlinse (102, 200, 210, 230) nach einem der vorangegangenen Ansprüche, wobei das Verfahren Folgendes umfasst:
das Bestimmen zumindest eines Betriebstyps, der über die Kontaktlinse (102, 200, 210, 230) durchgeführt wird, wobei ein erster Betrieb der Schaltungsanordnung ein erstes Leistungsausmaß erfordert und ein zweiter Betrieb der Schaltungsanordnung ein zweites Leistungsausmaß erfordert;
das Auswählen zumindest eines aus zwei oder mehr unterschiedlichen Leistungstypen basierend zumindest auf dem Betriebstyp oder der Umgebung außerhalb der Kontaktlinse (102, 200, 210, 230); und
das Ausgeben des Leistungstyps an die Schaltungsanordnung (209, 222, 242) und den einen oder die mehreren Sensoren (206, 214, 216, 218, 234, 238) der Kontaktlinse (102, 200, 210, 230), wobei der zumindest eine aus zwei oder mehr unterschiedlichen Leistungstypen ein Leistungsausmaß erfüllt oder übersteigt, das von dem Betrieb der Schaltungsanordnung (209, 222, 242) erfordert wird.

## Revendications

1. Lentille de contact (102, 200, 210, 230), comprenant :
un substrat (202, 212, 232) ; et
un circuit (204) comprenant :
un ou plusieurs capteurs (206, 214, 216, 218, 234, 238) disposés sur ou dans le substrat (202, 212, 232) ;
des circuits (209, 222, 242) disposés sur ou dans au moins une partie du substrat (202, 212, 232) ; et
une ou plusieurs cellules photovoltaïques (203, 204, 220, 236) disposées sur ou dans au moins une partie du substrat (202, 212, 232) ;
**caractérisée en ce que** la lentille de contact (102, 200, 210, 230) comprend en outre :
un composant de puissance hybride (208, 224, 244) disposé sur ou dans le substrat (102, 200, 210, 230), dans laquelle le composant de puissance hybride (208, 224, 244) est configuré pour :
sélectionner au moins l'un de deux ou plus de deux types de puissance différents sur la base d'au moins une opération des circuits (209, 222, 242), dans laquelle un premier type d'opération des circuits (209, 222, 242) nécessite un premier niveau de puissance et un second type d'opération des circuits (209, 222, 242) nécessite un second niveau de puissance, et
fournir le au moins un sélectionné de deux ou plus de deux types de puissance différents aux circuits (209, 222, 242) et aux un ou plusieurs capteurs (206, 214, 216, 218, 234, 238), dans laquelle le au moins un de deux ou plus de deux types de puissance différents atteint ou dépasse un niveau de puissance requis par l'opération des circuits (209, 222, 242) ;
dans laquelle l'un des deux ou plus de deux types de puissance différents est une puissance photovoltaïque fournie par les une ou plusieurs cellules photovoltaïques (203, 204, 220, 236).

2. Lentille de contact (102, 200, 210, 230) selon la revendication 1, dans laquelle les un ou plusieurs capteurs (206, 214, 216, 218, 234, 238) détectent au moins l'une parmi une pression, une lumière, une accélération, une température ou une contrainte.

3. Lentille de contact (102, 200, 210, 230) selon la revendication 1, dans laquelle un autre des deux ou plus de deux types différents de puissance est une puissance radiofréquence/inductive.

4. Lentille de contact (102, 200, 210, 230) selon la revendication 3, dans laquelle le composant de puissance hybride (208, 224, 244) est configuré pour fournir la puissance radiofréquence/inductive et la puissance photovoltaïque par intermittence.

5. Lentille de contact (102, 200, 210, 230) selon la revendication 1, comprenant en outre un ou plusieurs systèmes micro-électromécaniques (310) et dans laquelle un autre des deux ou plus de deux types de puissance différents est une puissance électrique fournie par les un ou plusieurs systèmes micro-électromécaniques (310).

6. Lentille de contact (102, 200, 210, 230) selon la revendication 5, dans laquelle le composant de puissance hybride (208, 224, 244) est configuré pour fournir la puissance photovoltaïque et la puissance électrique à partir des un ou plusieurs systèmes micro-électromécaniques (310) par intermittence.

7. Lentille de contact (102, 200, 210, 230) selon la revendication 1, comprenant en outre un composant de stockage de puissance (207) configuré pour stocker de la puissance provenant des unes ou plusieurs cellules photovoltaïques (203, 204, 220, 236).

8. Lentille de contact (102, 200, 210, 230) selon la revendication 7, dans laquelle le composant de stockage de puissance (207) comprend un condensateur de stockage et/ou une batterie à couches minces.

9. Lentille de contact (102, 200, 210, 230) selon la revendication 1, dans laquelle les une ou plusieurs cellules photovoltaïques (203, 204, 220, 236) sont translucides ou transparentes.

10. Lentille de contact (102, 200, 210, 230) selon la revendication 9, dans laquelle les une ou plusieurs cellules photovoltaïques (203, 204, 220, 236) sont disposées sur au moins la moitié d'une surface du substrat (202, 212, 232).

11. Lentille de contact (102, 200, 210, 230) selon la revendication 1, dans laquelle au moins l'un des une ou plusieurs cellules photovoltaïques (203, 204, 220, 236) ou des circuits est disposé le long d'un périmètre du substrat (202, 212, 232).

12. Lentille de contact (102, 200, 210, 230) selon la revendication 1, dans laquelle les une ou plusieurs cellules photovoltaïques (203, 204, 220, 236) comprennent un réseau circulaire constitué de deux ou plus de deux cellules photovoltaïques.

13. Lentille de contact (102, 200, 210, 230) selon la revendication 1, dans laquelle le composant de puissance hybride (208, 224, 244) est configuré pour fournir au moins deux des deux ou plus de deux types de puissance différents aux circuits (209, 222, 242) et aux un ou plusieurs capteurs (206, 214, 216, 218, 234, 238) et alterner entre la fourniture d'un premier des au moins deux des deux ou plus de deux types de puissance différents et la fourniture d'un second des au moins deux des deux ou plus de deux types de puissance différents.

14. Lentille de contact (102, 200, 210, 230) selon la revendication 1, dans laquelle les un ou plusieurs capteurs (206, 214, 216, 218, 234, 238) détectent un niveau d'au moins l'un parmi du lactate, du glucose, du cholestérol ou de l'urée dans un corps d'un porteur de la lentille de contact (102, 200, 210, 230).

15. Procédé de fonctionnement d'une lentille de contact (102, 200, 210, 230) selon l'une quelconque des revendications précédentes, le procédé comprenant les étapes consistant à :
déterminer au moins un type d'opération effectuée via la lentille de contact (102, 200, 210, 230), une première opération des circuits nécessitant un premier niveau de puissance et une seconde opération des circuits nécessitant un second niveau de puissance ;
sélectionner au moins l'un de deux ou plus de deux types de puissance différents sur la base, au moins, du type d'opération ou de l'environnement à l'extérieur de la lentille de contact (102, 200, 210, 230) ; et
délivrer en sortie le type de puissance aux circuits (209, 222, 242) et aux un ou plusieurs capteurs (206, 214, 216, 218, 234, 238) de la lentille de contact (102, 200, 210, 230), dans lequel le au moins l'un de deux ou plus de deux types différents de puissance atteint ou dépasse un niveau de puissance requis par l'opération des circuits (209, 222, 242) .
